# EUROPÄISCHE PATENTSCHRIFT

(11) **EP 2 526 406 B1**
(45) Veröffentlichungstag und Bekanntmachung des Hinweises auf die Patenterteilung: **01.10.2014**
(21) Anmeldenummer: 10776376.5
(22) Anmeldetag: 16.11.2010
(51) Int. Cl.: G01N 21/51, G01N 15/02

(54) **VERFAHREN UND VORRICHTUNG ZUR BESTIMMUNG DER STATISCHEN UND/ODER DYNAMISCHEN LICHTSTREUUNG**
METHOD AND DEVICE FOR DETERMINING THE STATIC AND/OR DYNAMIC SCATTERING OF LIGHT
PROCÉDÉ ET DISPOSITIF DE DÉTERMINATION DE LA DIFFUSION DE LUMIÈRE STATIQUE ET/OU DYNAMIQUE

(30) Priorität: 21.01.2010 DE 102010005962
(43) Veröffentlichungstag der Anmeldung: 28.11.2012
(73) Patentinhaber: ALV-laser Vertriebsgesellschaft mbH, 63225 Langen (DE)
(72) Erfinder: PETERS, Rainer, 63225 Langen/Hessen (DE)
(74) Vertreter: Meyer-Dulheuer, Karl-Hermann
(86) Internationale Anmeldenummer: PCT/EP2010/067533
(87) Internationale Veröffentlichungsnummer: WO 2011/088914

(56) Entgegenhaltungen:
- EP-A1- 1 022 549
- EP-A2- 0 867 711
- BANTCHEV GRIGOR ET AL: "Simple multiangle, multicorrelator depolarized dynamic light scattering apparatus", REVIEW OF SCIENTIFIC INSTRUMENTS, AIP, MELVILLE, NY, US, Bd. 77, Nr. 4, 4. April 2006 (2006-04-04), Seiten 43902-043902, XP012092998, ISSN: 0034-6748, DOI: DOI:10.1063/1.2186807

## Beschreibung

Die vorliegende Erfindung betrifft ein Verfahren und eine Vorrichtung zur Bestimmung der statischen und/oder dynamischen Lichtstreuung. Bei dem Verfahren werden mehrere unterschiedliche Zonen innerhalb eines Probengefäßes während verschiedener Zeitabschnitte beleuchtet, wobei Licht an der Probe gestreut wird. Das gestreute Licht wird mittels mehrerer Detektoren erfasst, wobei jeder Detektor während der Durchführung des Verfahrens gestreutes Licht aus mehreren unterschiedlichen Zonen erfasst, und jeder Detektor während eines Zeitabschnittes jeweils gestreutes Licht aus einer Zone erfasst und ein Signal erzeugt. Diese Signale werden an eine Auswerteelektronik übertragen und von dieser verarbeitet, wobei jeweils diejenigen Signale gemeinsam verarbeitet werden, die vom selben Detektor erzeugt werden und aus der Erfassung von gestreutem Licht aus derselben Zone resultieren.

Die Messung der dynamischen und/oder statischen Lichtstreuung ermöglicht es, zum Beispiel die Partikelgröße, die Partikelgestaltung, die Diffusionskoeffizienten und die molaren Gewichte von gelösten Substanzen zu bestimmen. Dabei werden eine ein kohärentes Licht aussendende Lichtquelle und ein empfindlicher Einzelphotonendetektor eingesetzt, um die zeitintegrierte mittlere Lichtintensität (statische Lichtstreuung) und die zeitabhängige Änderung der Lichtintensität (dynamische Lichtstreuung, DLS) einer Probe in einer Lösung zu messen. Jede Änderung des Streuwinkels und damit des Wellenvektors des gestreuten Lichtes gibt zusätzliche Informationen sowohl bei Untersuchungen der statischen als auch der dynamischen Lichtstreuung. Die bei der statischen Lichtstreuung gemessene Gesamtintensität des Streulichtes wird, nach Berücksichtigung einiger Probenparameter wie beispielsweise der Probenkonzentration und der Intensität der Lichteinstrahlung, umso höher, je größer das zugrundegelegte beleuchtete Probenvolumen ist. Bei der dynamischen Lichtstreuung vergleicht (resp. korreliert) man die Änderungen der Lichtintensität des zu einem bestimmten Zeitpunkt von der Probe abgestrahlten kohärenten Streulichtes mit dem von der gleichen Probe zu einem anderen Zeitpunkt abgestrahlten Streulicht. Hierbei werden kleine Untersuchungsvolumina oder alternativ die Verwendung von beliebigen Flüssigkeitsvolumina sowie kohärentes Licht benötigt, um sicherzustellen, dass eine möglichst hoch-kohärente Mischung des Streulichtes stattfindet. Inkohärente oder niedrig-kohärente Mischung des Streulichts würde dagegen die (meist durch die Diffusion der Streuzentren in der Lösung) bedingte Änderung der Lichtintensität zusehend wegmitteln, so dass eine weitere Analyse dieser extrem erschwert oder gar unmöglich würde.

DLS-Messungen werden normalerweise mit Einzelphotonendetektoren, wie Photomultipliern (PMT) oder Lawinenfotodioden *(avalanche photodiode,* APD) durchgeführt, da die Notwendigkeit zur strikt kohärenten Detektion zusammen mit dem in der Regel eher geringen Streuquerschnitt der zu untersuchenden Probe nur eine sehr geringe, detektierbare Lichtintensität zulässt (typischerweise im Bereich von weniger als 1 pW). Um diese geringe Lichtintensität mit den auftretenden Bandbreiten der Änderung der Lichtintensität (bis in den MHz-Bereich) detektieren zu können, sind Einzelphotonenzähler nach derzeitigem Stand der Technik unerlässlich. Als Lichtquelle wird meist ein Laser eingesetzt und in der Mitte der Anordnung befindet sich die Messzelle, wobei, um die Lichtstreuung bei beliebigen Winkeln erfassen zu können, meist eine zylindrische Glas- oder Quarzglaszelle benutzt wird. Traditionell werden für solche Messungen Goniometer eingesetzt, bei welchen sich auf einem feststehenden Arm die Lasereinheit befindet und der Detektor auf einem schwenkbaren Arm angebracht ist. Die Apparatur wird dabei so justiert, dass die Probe genau im Rotationszentrum eines Drehtisches mit dem Dreharm steht. Das Laserlicht wird ebenfalls auf die Probe im Rotationszentrum justiert. Damit ist sichergestellt, dass das gleiche Streuvolumen im gesamten Streuwinkelbereich untersucht wird, solange die geforderte Justierung in allen Achsen präzise ist. Bei Geräten, die bei einem festen Winkel messen, wird eine kompaktere Anordnung möglich, da auch einfache quaderförmige Küvetten mit sehr kleinen Volumina eingesetzt werden können.

Für die Verarbeitung der Daten können unterschiedliche Verfahren genutzt werden. Um die dynamischen Kenngrößen der Streuzentren (meist Partikel, aber auch generell höhermolekulare Moleküle wie Polymere oder Proteine) zu analysieren, wird eine Autokorrelation des Messsignals über einen bestimmten Zeitraum durchgeführt. Diese Datenverarbeitung wird durch eine Signalauswerteelektronik (Korrelator) übernommen und liefert eine sogenannte Korrelationsfunktion. Aus dieser lässt sich dann der mittlere Diffusionskoeffizient (oder auch dessen Verteilung) der Streuzentren berechnen und aus diesem weitere Parameter, wie beispielsweise der hydrodynamische Radius. Normalerweise wird ein Detektor pro Streuwinkel eingesetzt, der das gemessene Signal an einen Korrelator übermittelt.

Ein wichtiges Ziel bei der Optimierung der DLS besteht darin, die Genauigkeit der Messung innerhalb einer vorgegebenen Messzeit zu erhöhen. Dies wird allerdings dadurch limitiert, dass die zufällige Bewegung der Streuzentren (Brown'sche Molekularbewegung) und die kohärente Abbildung durch Lichtstreuung dieser zufälligen Bewegung als Änderung der Streuintensität mit der Zeit eine endlich schnelle, sich aus dem Diffusionskoeffizienten und dem Streuvektor ergebende mittlere Änderungszeit bedingt. Diese mittlere Änderungszeit definiert die mittlere Anzahl solcher Änderungszyklen pro Zeiteinheit und damit natürlich auch die im Mittel erreichbare Genauigkeit der Messung dieses Parameters. Da dazu die sich ergebende Änderung der Lichtintensität, weil diese allein durch die kohärente Mischung der Streuung aller betrachteten Streuzentren hervorgerufen wird, in Relation unabhängig von der betrachteten Teilchenanzahl ist, also der sich ändernde Anteil des Streulichts in Relation zum Gesamtstreulicht, unabhängig von der betrachteten Anzahl von Streuzentren, konstant bleibt, führt eine Vergrößerung des betrachteten/beleuchteten Probenvolumens an sich nicht zu genaueren Messergebnissen. Stattdessen muss eine Mittelung der Messergebnisse über mehrere, voneinander unabhängige Messorte erfolgen.

Dies kann beispielsweise durch eine mehrfache Messung nacheinander erfolgen, was allerdings offensichtlich keinen Gewinn an Genauigkeit gegenüber einer gleichlangen, kontinuierlichen Messung erlaubt, oder aber durch parallele Messung an verschiedenen, voneinander unabhängigen Teilvolumen innerhalb des Probenvolumens durch voneinander unabhängige Messapparaturen.

Ein Gerät zur Messung des Streulichts, bei welchem die Messgenauigkeit erhöht ist, ist in der US-Patentschrift 4,710,642 beschrieben. Mit einer Vielzahl von Detektoren kann die Mikrostruktur einer Probe über einen breiten Bereich der räumlichen Frequenz gemessen werden. Eine Reihe von Detektoren ist dabei senkrecht zur Ebene des einfallenden Laserstrahles und eines Spiegelreflektierenden Strahles angeordnet, um das zurück gestreute und das vorwärts gestreute Licht in der senkrechten Ebene zu erkennen. Es können zwei Laserstrahlen mit unterschiedlichen Wellenlängen verwendet werden, um die optischen Eigenschaften einer Folie und des zugrunde liegenden Substrates zu erkennen. Aus der EP 0 867 711 B1 ist ein Messgerät zur Bestimmung der statischen und/oder dynamischen Lichtstreuung bekannt, wobei auf einem Drehtisch eine Vielzahl von Detektoren in beliebigen Winkelabständen nebeneinander angeordnet sind. Hierbei wird stets das Streulicht des gleichen Probenvolumens bei Betrachtung der Probe unter verschiedenen Streuwinkeln gemessen. Aufgrund der hohen Preise der Einzelphotonendetektoren und des baulichen Aufwandes sind jedoch auch bei diesen Methoden Grenzen gesetzt. Es gibt alternativ sogenannte Multidetektoren, in denen zum Beispiel 32 Detektoren in einem Gehäuse zusammengefasst sind. Hierbei handelt es sich jedoch ebenfalls um große und kostspielige Apparaturen. In Bantchev et al. (Bantchev Grigor et al: "Simple multiangle, multicorrelator depolarized dynamic light scattering apparatus", Review of Scientific Instruments. 77. 043902 1-6 (2006), DOI:10.1063/1.2186807) wird eine Multikorrelator Vorrichtung zur depolarisierten dynamischen Lichtstreuung (depolarized dynamic light scattering, DDLS) zur simultanen Messung von verschiedenen Streuwinkeln beschrieben. Diese Vorrichtung verwendet einige wenige Detektoren, um sireuwinkeiabhängige Messungen durchzuführen. Bei dieser sequentiellen Messung wird Licht aus einem einzigen beleuchteten Volumen von allen vorhandenen Detektoren und verschiedenen Streuwinkeln erfasst.

Die Detektoren werden dabei unter Verwendung jeweils unterschiedlicher Streugeometrien mehrfach verwendet.

Eine Alternative, um eine Vielfachdetektion bei DLS zu ermöglichen, ist der Einsatz von einer Laser-Lichtquelle in Kombination mit CCD *(charge-coupled devi*ce)-Sensoren, die zusätzlich eine örtliche Auflösung der Signale erlauben. Der große Nachteil liegt jedoch in der erheblich geringeren Geschwindigkeit der Auslesung (<100 Bilder/s für CCDs mit zu Einzelphotonendetektoren vergleichbarer Empfindlichkeit) im Vergleich zu Einzelphotonendetektoren (im ns-Bereich). Für schneller auslesbare CCDs ist dagegen die Lichtempfindlichkeit massiv verringert und diese eignen sich daher nicht mehr generell für die Verwendung in der DLS.

Ein Problem bei DLS ist, dass nur stark verdünnte Proben analysiert werden können, in denen das Licht nur an einem Streuzentrum gestreut wird, bevor es den Einzelphotonendetektor trifft. Bei höherwerdender Partikel-Konzentration wächst die Wahrscheinlichkeit, dass das Licht an mehr als nur einem Streuzentrum gestreut wird, so dass es zu einer Verfälschung des Messergebnisses kommt, weil der sich ergebende Streuvektor für diese mehrfache Streuung dann von dem der Einzelstreuung beliebig abweichen kann. Die Notwendigkeit zur starken Verdünnung der Probe führt neben der sehr geringen zu erwartenden Lichtintensität des Streulichts auch dazu, dass die Methode sehr empfindlich auf Verunreinigungen reagiert. Um dagegen Messung bei hoher Partikel-Konzentration zu ermöglichen, haben sich im Wesentlichen zwei Kreuzkorrelations-Techniken etabliert, bei welchen im selben Probenvolumen bei gleichen Streuwinkeln mehrfach gemessen wird. Hierdurch wird die Vielfachstreuung unterdrückt, resp. dekorreliert, d.h. ihr Effekt wird als gleichmäßiges, zufälliges Rauschen über die gesamte Korrelationsfunktion verteilt und somit systematische Verzerrungen der Korrelationsfunktion vermieden. Bei der *"3D-Cross Correlation"* werden dazu zwei Laserstrahlen mit unterschiedlichem Einfallswinkel auf die Probe gestrahlt und das gestreute Licht ebenfalls von zwei Detektoren gemessen. Bei *der "Dual Colour Cross Correlation"* wird hingegen die Probe mit zwei Laserstrahlen unterschiedlicher Wellenlänge im gleichen Winkel angestrahlt und das gestreute Licht wird von zwei Detektoren gemessen. Beide Methoden basieren dabei auf der Idee, Streulicht aus identischen Streuvektoren miteinander zu korrelieren, allerdings so, dass das Streulicht voneinander verschiedenen Raumzonen entstammt. Es korrelieren in diesem Fall dann nur die Streulichtanteile aus dem vorgesehenen Streuvektor. Die Datenverarbeitung erfolgt auch bei diesen Techniken mittels einer einzelnen Signalauswerteelektronik. Aus der EP 1 022 549 B1 ist beispielsweise ein Verfahren basierend auf dynamischer Lichtstreuung bekannt, bei der ein Probenvolumen gleichzeitig mit einer Mehrzahl diskreter Wellenlängen beleuchtet wird und jede der Wellenlängen bei ungefähr gleichem Streuwinkel erfasst wird. Mittels dieser Methode kann mit Hilfe der Kreuzkorrelation das Signal-Rauschen entfernt werden. Allen Verfahren aus dem Stand der Technik ist ihre hohe Messzeit gemeinsam, so dass, wenn beispielsweise eine Vielzahl von Parametern (wie Verdünnungsreihen) untersucht werden müssen, sich DLS-Messungen über einen gesamten Tag erstrecken können, insbesondere wenn Verteilungsfunktionen des Diffusionskoeffizienten oder des hydrodynamischen Radius berechnet werden sollen, denn für diese Berechnung sind hoch-genaue Korrelationsfunktionsdaten unerlässlich. Da solche Messungen zumeist automatisiert durchgeführt werden, hält sich der personelle Aufwand zwar in Grenzen. Es ist jedoch mit einem großen Aufwand verbunden, die Umgebung für die Messung stabil zu halten. Zum Einen ergeben sich Probleme, wenn das System über einen längeren Zeitraum läuft. Beim Laser kann es aufgrund thermischer und/oder elektrischer Schwankungen zu Intensitätsschwankungen kommen. Über einen langen Zeitraum von mehreren Stunden kann zudem bei vielen Lasersystemen nicht gewährleistet werden, dass die Wellenlänge der Laser-Lichtquelle absolut konstant bleibt. Temperaturschwankungen können einen drastischen Effekt auf die Viskosität des Lösungsmittels haben und somit einen erheblichen Einfluss auf die Diffusionsgeschwindigkeit haben. Zum Anderen muss die Probe ebenfalls über einen längeren Zeitraum stabil bleiben. Instabilitäten der Probe werden oftmals durch Aggregation, aber auch Gelierung, Polymerisation und/oder Kristallisation hervorgerufen.

Aufgabe der vorliegenden Erfindung ist demnach, die bekannten Nachteile aus dem Stand der Technik zu überwinden und eine starke Vervielfachung der Messgenauigkeit innerhalb derselben Messzeit im Vergleich zu "Ein-Detektor-Messungen" zu erreichen. Hierbei soll ein Gerät bereitgestellt werden, welches eine kompakte und simple Bauweise aufweist und nicht zu hochpreisig ist. Zusätzlich soll eine örtlich aufgelöste Messung möglich sein, so dass bestimmte Vorgänge (wie beispielsweise Kristallisationsprozesse) innerhalb einer Probe räumlich und zeitlich verfolgt werden können. Außerdem soll eine Bandbreite der Messung im µs-Bereich ermöglicht werden, so dass die DLS-Messungen keiner Limitationen durch Teilchengröße, Viskosität oder festgelegte Streuwinkel mehr unterliegen, wie dies bei den Methoden aus dem Stand der Technik der Fall ist.

Diese Aufgabe wird gelöst durch ein Verfahren zur Bestimmung der statischen und/oder dynamischen Lichtstreuung, welches folgende Schritte aufweist:
a) Beleuchten mehrerer unterschiedlicher Zonen innerhalb eines Probengefäßes während verschiedener Zeitabschnitte,
   wobei es sich bei den unterschiedlichen Zonen um räumlich voneinander getrennte Zonen handelt, wobei der räumliche Abstand der Zonen so gewählt ist, dass sich durch die gewählte Betrachtungsoptik voneinander unabhängige, nicht-überlappende Betrachtungszonen ergeben, und
   wobei Licht an der Probe gestreut wird, und
   wobei die unterschiedlichen Zonen nacheinander in einer sich wiederholenden, periodischen oder zufälligen Abfolge beleuchtet werden, wobei die Wiederholungsperiodendauer weniger als 10 µs beträgt,
b) Erfassen des gestreuten Lichts mittels mehrerer Detektoren,
   wobei jeder Detektor während der Durchführung des Verfahrens gestreutes Licht aus mehreren unterschiedlichen Zonen erfasst, und
   wobei jeder Detektor während eines gegebenen Zeitabschnittes jeweils gestreutes Licht aus ein und derselben Zone erfasst und ein Signal erzeugt,
c) Übertragen der Signale an eine Auswerteelektronik und Verarbeiten der Signale durch die Auswerteelektronik, wobei jeweils diejenigen Signale zur Korrelationsberechnung gemeinsam verarbeitet werden, die vom selben Detektor erzeugt werden und aus der Erfassung von gestreutem Licht aus derselben Zone resultieren.

Bei diesem Verfahren werden, im Gegensatz zu den aus dem Stand der Technik bekannten Verfahren, unterschiedliche Zonen, somit auch unabhängige Streuvolumen nacheinander, während verschiedener Zeitabschnitte, beleuchtet. Hierbei wird Licht an der Probe gestreut und von mehreren Detektoren erfasst. Ein Detektor erfasst während des Verfahrens gestreutes Licht aus mehreren Zonen, dies geschieht jedoch nacheinander. Somit wird während jedes Zeitabschnittes jeweils nur gestreutes Licht aus einem Streuvolumen erfasst und daraus mehrere Signale erzeugt. Diese werden an eine Auswerteelektronik übertragen, wobei jeweils diejenigen Signale gemeinsam verarbeitet werden, welche von gestreutem Licht aus demselben Streuvolumen stammen und vom selben Detektor erzeugt werden. Die Messdaten zu jedem Streuvolumen werden dann jeweils zu einem Korrelator übertragen, der dann zu jedem Streuvolumen eine Korrelationsfunktion generiert.

Das erfindungsgemäße Verfahren erlaubt damit multi-parallele Messungen an identischen Streuwinkeln. Um die Messgenauigkeit zu erhöhen, werden N voneinander unabhängige Experimente - und somit auch N Einzelphotonendetektoren - benötigt, wobei voneinander getrennte Streuvolumen analysiert werden müssen. Der Vorteil von Einzelphotonenzählern ist ihre Schnelligkeit bei der Messung, welche im ns-Bereich liegt. Die Diffusion der Streuzentren läuft jedoch wesentlich langsamer ab, so dass im µs-Bereich keine wesentlichen Änderungen in der Streulichtintensität auftreten, da sich die Position der Streuzentren zueinander in dieser Zeit kaum verändert hat. Dieser Zustand wird ausgenutzt, indem jeder Einzelphotonendetektor zur Detektion von unterschiedlichen Zonen innerhalb des Probengefäßes, die verschiedenen räumlichen Streuvolumen entsprechen, eingesetzt wird, welche im sub-µs-Bereich getaktet und zeitabhängig beleuchtet werden. Eine reguläre Messzeit (von etwa 1 µs) wird hierbei in mehrere Intervalle zerlegt, so dass innerhalb einer Messzeit mehrere räumliche Streuvolumen analysiert werden können (Zeitmultiplexen). Die Informationen des Einzelphotonendetektors werden synchron zur jeweiligen Beleuchtung einer unabhängigen Korrelator-Untereinheit zur Signalauswertung zugeführt.

Die unterschiedliche Beleuchtung von unabhängigen, für die Einzelphotonendetektoren sichtbaren Streuvolumen lassen sich durch den Einsatz mehrerer, optisch paralleler Laserlichtquellen erreichen. Diese werden zeitlich versetzt an- und ausgeschaltet (gemultiplext). Die Taktung der einzelnen Laserlichtquellen muss hierbei sehr schnell erfolgen, damit auch schnelle Partikeldiffusionen verzerrungsfrei erfasst werden können. Die Taktung liegt bevorzugt unter 1 µs, damit in dem Bereich gemessen werden kann, in dem keine wesentlichen Fluktuationen in der Streulichtintensität auftreten. Mit Laserdioden sind Taktzeiten im Bereich von mehreren MHz leicht zu realisieren, wobei dazu im gepulsten Betrieb auch höhere Leistungen als im Dauerbetrieb ermöglicht werden. Zudem führt in der Regel der im gepulsten Betrieb mögliche höhere Betriebsstrom auch zu einer verbesserten Kohärenz der Laserdiode. Die Synchronisation von Beleuchtung und Detektion mit dem Zeitmultiplexen ist ebenfalls leicht realisierbar und mit einer Auflösung von unter 10 ns möglich.

Mit Hilfe dieses neuartigen Verfahrens können eine Vielzahl von Messungen an unterschiedlichen Streuvolumen parallel durchgeführt werden. Die Anzahl der parallelen Messungen wird durch die Anzahl der Laser, beziehungsweise die Anzahl der Streuvolumen (M) und die Anzahl der Einzelphotonendetektoren (N), bestimmt und kann bis zu M x N betragen. Eine Messung mit dem erfindungsgemäßen Verfahren entspricht damit M x N unabhängigen Messgeräten und führt M x N mal schneller zu vergleichbaren Ergebnissen. Somit werden M x N -mal genauere Messungen als mit einem konventionellen Ein-Detektor-Aufbau in der gleichen Zeit realisiert.

Alternativ ist es möglich, eine Messung an M x N unterschiedlichen Streuvolumen im Raum durchzuführen. Dies ist wichtig, wenn bestimmte Prozesse in der Probe verfolgt werden sollen, wie beispielsweise Kristallisationen, Aggregationen oder Polymerisationen. Das neue Verfahren ermöglicht somit zusätzlich eine räumliche Auflösung innerhalb der zu messenden Probe. Außerdem ist das Verfahren nicht mehr auf eine bestimmte Teilchengröße, Lösungsmittelviskosität oder Streuwinkel limitiert, wie dies bei den CCD-basierten Lösungen der Fall ist, da MHz-Bandbreiten erreicht werden. Ein weiterer Vorteil des erfindungsgemäßen Verfahrens ist, dass Ausreißer in einer Messreihe leichter erfasst werden können. Wenn beispielsweise Schmutz- oder Staubteilchen die Messung stören, können diese, weil sie meist zeitlich nur an distinkten Stellen im Probenvolumen auftreten sicher bestimmt und rausgerechnet werden.

In einer bevorzugten Ausführungsform der Erfindung beträgt die Anzahl der unterschiedlichen Zonen mindestens 2, vorzugsweise mindestens 3 und insbesondere mindestens 4. Hierbei ist es bevorzugt, wenn kohärentes Licht für die Beleuchtung der unterschiedlichen Zonen verwendet wird. Bei der bevorzugten Lichtquelle handelt es sich um einen Laser, da nur Laser-Licht auch zeitversetzt interferenzfähig ist und nur Laser-Lichtquellen die nötigen hohen Lichtdichten monochromatisch und räumlich kohärent erzeugen können. Da der Streuvektor von der Wellenlänge des einfallenden Lichts abhängt, ist es bevorzugt, wenn Laser-Licht der gleichen Wellenlänge für das Beleuchten der unterschiedlichen Zonen eingesetzt wird. Es ist weiterhin bevorzugt, wenn an unterschiedlichen Streuwinkeln gemessen werden kann, so dass alle Detektoren Streulicht mit demselben Betrag des Streuvektors detektieren.

In einer weiteren bevorzugten Ausgestaltungsform des erfindungsgemäßen Verfahrens beträgt die Anzahl der Detektoren mindestens 2, vorzugsweise mindestens 4 und insbesondere mindestens 16. Alternativ ist es bevorzugt, wenn die Detektoren demselben Streuwinkel zugeordnet sind.

Die Auswerteelektronik weist vorzugsweise mehrere Korrelator-Untereinheiten auf und erlaubt die simultane Berechnung von mehreren Korrelationsfunktionen, wobei Signale von jeweils einem Detektor zur Korrelationsberechnung an jeweils dieselbe Korrelator-Untereinheit übertragen werden. Hierbei werden jeweils diejenigen Signale gemeinsam verarbeitet, die vom selben Detektor erzeugt werden und aus der Erfassung von gestreutem Licht aus derselben Zone resultieren. Somit werden die Informationen aus einem Streuvolumen jeweils zu einem Korrelator geleitet, so dass pro Streuvolumen eine Korrelationsfunktion generiert wird.

Erfindungsgemäß handelt es sich bei den unterschiedlichen Zonen um räumlich voneinander getrennte Zonen, wobei der räumliche Abstand der Zonen so gewählt ist, dass sich durch die gewählte Betrachtungsoptik voneinander unabhängige, nicht-überlappende Betrachtungszonen ergeben. Eine typische, für die DLS verwendete, Beleuchtungsgeometrie ist ein schwach fokussierter, beugungsbegrenzter Laserstrahl mit einem Radius von 150 µm (bezogen auf die 1/e²-Intensität) im Fokalpunkt und einer nur sehr schwach divergenten Strahltaille. Für eine solche Beleuchtungsgeometrie wäre eine Anordnung der Zonen mit einer Separation von 0.4 mm (Mittenabstand) zueinander möglich. Bei den unterschiedlichen Zonen handelt es sich dann um voneinander unabhängige, nicht-überlappende Streuvolumen, wobei die räumliche Geometrie variabel ist; die Zonen können sowohl vertikal als auch horizontal angelegt sein.

Erfindungsgemäß werden die unterschiedlichen Zonen nacheinander in einer sich wiederholenden, periodischen oder zufälligen Abfolge beleuchtet, wobei die Wiederholungsperiodendauer weniger als 10 µs, vorzugsweise weniger als 2 µs und insbesondere weniger als 1 µs beträgt. Bei der Beleuchtung der unterschiedlichen Zonen in einer sich wiederholenden periodischen Abfolge werden die verschiedenen Zonen jeweils in der gleichen Reihenfolge beleuchtet (z.B. bei 3 Zonen: Beleuchtung der Zonen 1,2,3,1,2,3, usw.). Wenn von einer sich wiederholenden zufälligen Abfolge die Rede ist, ist damit gemeint, dass die Beleuchtungsreihenfolge sich bei jeder Beleuchtungsperiode ändert (z.B. bei 3 Zonen: Beleuchtung der Zonen 1,3,2,3,1,2, usw.). So können systematische Fehler, die durch die rein periodische Beleuchtung hervorgerufen werden können, verringert oder sogar vermieden werden.

Ebenfalls Bestandteil der vorliegenden Erfindung ist eine Vorrichtung zur Bestimmung der statischen und/oder dynamischen Lichtstreuung gemäß Anspruch 6, welche mindestens ein Probengefäß; eine Lichtquelle, welche in der Lage ist, während verschiedener Zeitabschnitte unterschiedliche Zonen innerhalb des Probengefäßes zu beleuchten; mehrere Detektoren, welche so angeordnet sind, dass jeder Detektor gestreutes Licht aus mehreren der Zonen erfassen kann und eine Auswerteelektronik, welche mit den Detektoren verbunden ist, aufweist.

In einer bevorzugten Ausgestaltungsform der erfindungsgemäßen Vorrichtung ist diese derart ausgestaltet, dass
- die Anzahl der unterschiedlichen Zonen mindestens 2, vorzugsweise mindestens 3 und insbesondere mindestens 4 beträgt und/oder
- es sich bei der Lichtquelle um eine Laserlichtquelle handelt, wobei es bevorzugt ist, wenn die Lichtquelle mehrere Laserdioden aufweist, wobei die Anzahl an Laserdioden vorzugsweise mindestens 2, besonders bevorzugt mindestens 3 und insbesondere mindestens 4 beträgt und/oder
- die Lichtquelle eine optische und/oder opto-elektrische Vorrichtung aufweist, die in der Lage ist, das erzeugte Licht in mehrere, voneinander zeitlich getrennt ein- und ausschaltbare Strahlenbündel aufzutrennen, wobei es bevorzugt ist, wenn die Anzahl an Strahlenbündeln mindestens 2, vorzugsweise mindestens 3 und insbesondere mindestens 4 beträgt und/oder
- die Lichtquelle eine Optik aufweist, die in der Lage ist, das erzeugte Licht so zu lenken, dass während verschiedener Zeitabschnitte unterschiedliche Zonen innerhalb des Probengefäßes beleuchtet werden.

In einer weiteren vorteilhaften Ausgestaltung beträgt die Anzahl der Detektoren mindestens 2, vorzugsweise mindestens 3 und insbesondere mindestens 4, wobei es bevorzugt ist, wenn die Detektoren im selben Streuwinkel angeordnet sind und/oder wenn es sich bei den Detektoren um Einzelphotonendetektoren handelt.

In einer vorteilhaften Ausgestaltungsform weist die Auswerteelektronik mehrere Korrelator-Untereinheiten zur Berechnung der Korrelationsfunktionen auf, so dass zu den Signalen jedes Detektors für jede beleuchtete Zone eine unabhängige Korrelationsfunktion berechnet wird, wobei die Anzahl der Korrelator-Untereinheiten vorzugsweise mindestens 2, besonders bevorzugt mindestens 48 und insbesondere mindestens M x N beträgt, wobei M die Anzahl der Zonen und N die Anzahl der Detektoren ist.

In einer weiteren vorteilhaften Ausgestaltung sind die Detektoren über einen Multiplexer mit der Auswerteelektronik verbunden. Bei einem Multiplexer handelt es sich um ein Selektionsschaltnetz, mit dem aus einer Anzahl von Eingangssignalen eines ausgewählt werden kann. Mit Hilfe eines Demultiplexers können die zusammengefassten Datenkanäle wieder aufgetrennt werden.

Im Folgenden soll die Erfindung anhand von Zeichnungen näher erläutert werden, wobei sich die Erfindung selbstverständlich nicht auf die dargestellten Ausgestaltungen beschränkt. Dabei zeigen:
- Fig. 1:: einen schematischen Versuchsaufbau für multi-parallele Messungen,
- Fig. 2:: einen schematischen Versuchsaufbau für multi-parallele Messungen mit Faser-Optik und
- Fig. 3:: in den Teilabbildungen a bis c, die Taktungen von drei Lasern im Laufe des erfindungsgemäßen Verfahrens.

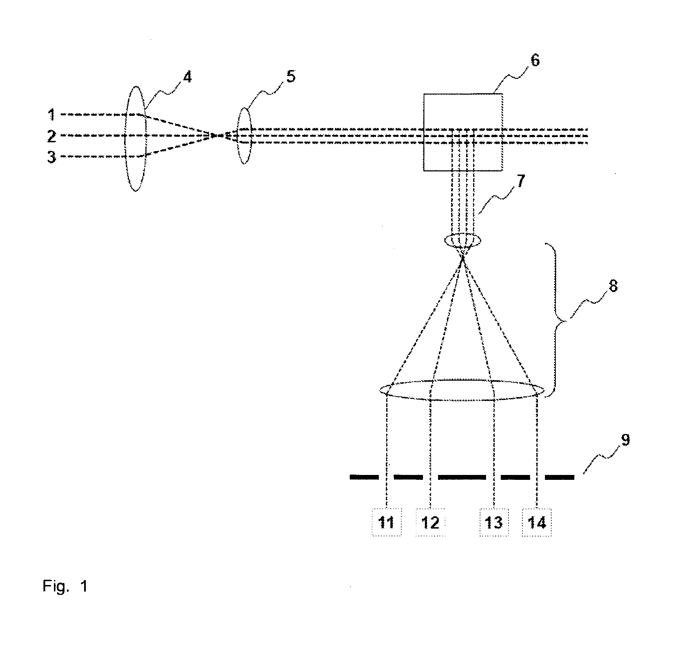

In Fig. 1 ist ein schematischer Versuchsaufbau für multi-parallele Messungen dargestellt. In diesem Beispiel werden drei Laser **1,2,3** parallel zueinander aufgebaut und mittels Optik **4,5** parallel mit einem geringen lateralen Versatz, der maximal 1 mm beträgt, in ein Probengefäß **6** geführt. Die Einzel- oder Multidetektionseinheit mit Einzelphotonendetektoren **11,12,13,14** empfängt Streulicht **7** aus der Probe im Probengefäß unter einem Streuwinkel von 90°. Voneinander unabhängige, nahe aneinander liegende Streuvolumen werden mittels Mikroskop-Optik **8** und Blendensystemen **9** definiert und so optisch vergrößert, dass eine solche Raumzone jeweils nur einen Einzelphotonenzähler, beziehungsweise einen Kanal eines Multi-Photonenzählers, beleuchtet. Die Taktung der Laser beträgt in diesem Beispiel 100 ns "an-Zeit" pro Laser alle 300 ns.

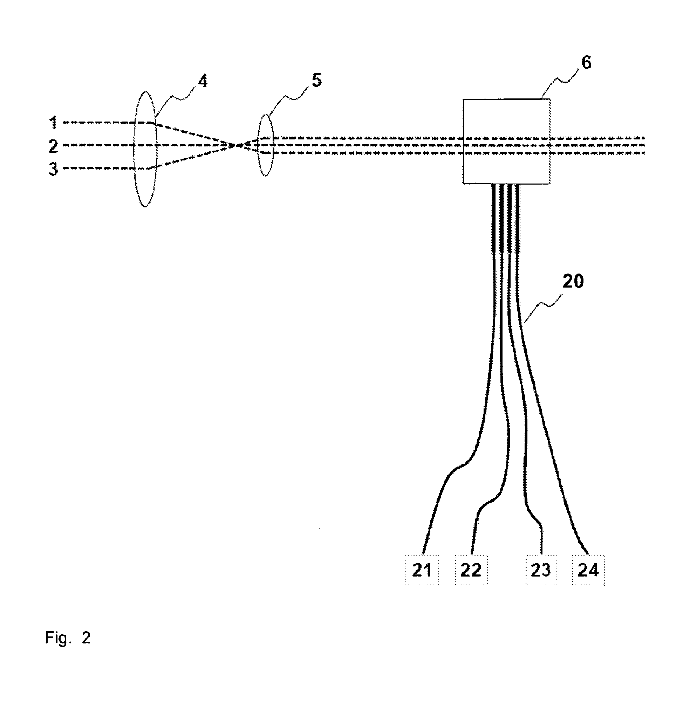

In Fig. 2 ist ein alternativer Versuchsaufbau dargestellt. Alternativ zur Mikroskop-Optik mit einem Blendensystem, können auch optische Fasern **20** zum Einsatz kommen, welche das Licht den einzelnen Detektoren zuleiten. Faserdetektoren **21,22,23,24** ergeben wegen ihrer Eigenschaft, nur wenige transversale Moden aus dem gesamten Streulicht einer Probe auszuwählen, eine höhere Lichtintensität mit einer besseren Kohärenz des aufgefangenen Lichtes, verglichen mit den klassischen Lochblendendetektoren. Es können sowohl Multimode-Fasern als auch Singlemode-Fasern eingesetzt werden. Mittels eines Kollimators wird ein paralleler Strahlenverlauf erzeugt und damit die Detektion allein des parallelen Anteils des Streulichts sichergestellt.

Es sind ebenfalls Mischaufbauten mit sowohl Elementen aus der klassischen Optik als auch faseroptischen Bauteilen denkbar.

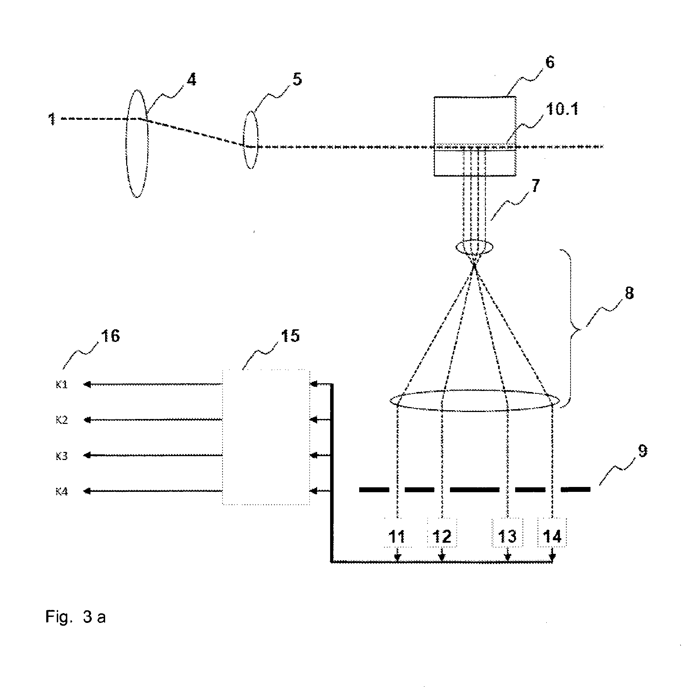

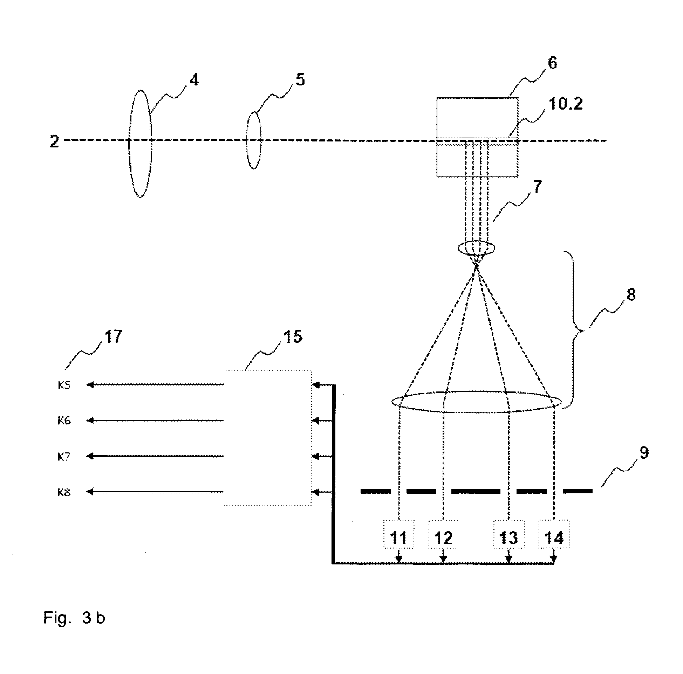

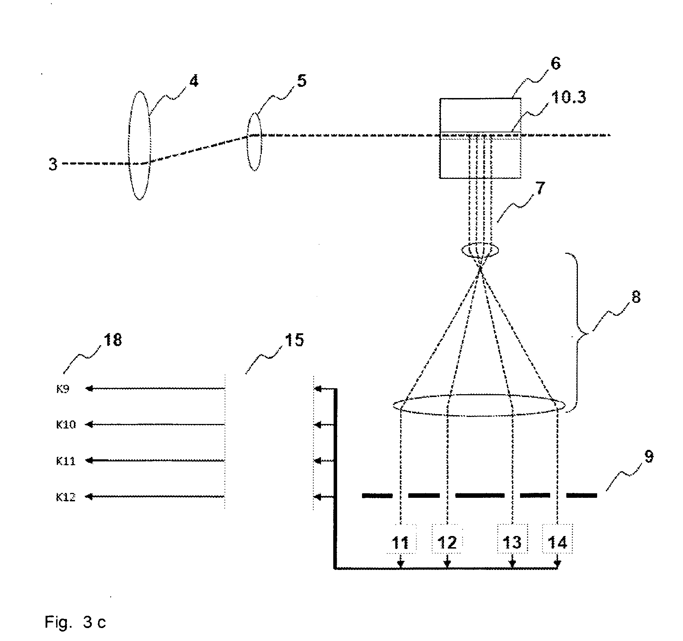

Fig. 3 zeigt in den Teilabbildungen a bis c jeweils die Taktung der einzelnen Laser im Laufe des erfindungsgemäßen Verfahrens zu den Zeitpunkten t1, t2 und t3. In Fig. 3a zum Zeitpunkt t1 ist der Laser **1** angeschaltet, so dass ein bestimmtes Streuvolumen **10.1** beleuchtet wird. Das hierbei an der Probe **6** gestreute Licht **7** wird an **4** Einzelphotonendetektoren **11,12,13,14** übermittelt, die jeweils ein Signal erzeugen, welches an einen Multiplexer **15** übertragen wird. Die Signale werden dann von einer Auswerteelektronik verarbeitet, die aus mehreren Korrelator-Untereinheiten **16,17,18** besteht, wobei jeweils die Signale von den Korrelator-Untereinheiten 1 bis 4 zusammen verarbeitet werden **16,** die vom selben Detektor erzeugt werden und aus der Erfassung von gestreutem Licht aus derselben Zone resultieren. Wenn der nächste Laser **2** zum Zeitpunkt t2 angeschaltet wird, wird ein anderes Streuvolumen **10.2** beleuchtet. Das an der Probe **6** gestreute Licht wird wieder an die 4 Einzelphotonendetektoren **11,12,13,14** übertragen, die jeweils ein Signal erzeugen, welches an den Multiplexer **15** übertragen wird. Die Signale, die jeweils vom selben Detektor erzeugt werden, werden daraufhin von den Korrelator-Untereinheiten 5 bis 8 verarbeitet **17.** Bei Anschalten des dritten Lasers **3** zum Zeitpunkt t3 wird ein weiteres Streuvolumen **10.3** beleuchtet und die von den Detektoren **11,12,13,14** erzeugten Signale werden von den Korrelator-Untereinheiten 9 bis 12 verarbeitet **18.** Bei diesem beispielhaften Verfahren wird jedes Streuvolumen für 100 ns beleuchtet, so dass sich dieser Vorgang alle 300 ns wiederholt. In diesem Fall ist es möglich, in einem Zeitraum von 300 ns 12 parallele Messungen durchzuführen und eine Minute Messzeit entspricht somit 12 Minuten Messzeit an einem konventionellen Ein-Detektor-Aufbau. Dies erlaubt 12-fach genauere Messungen in der gleichen Zeit. Es ist bei dem erfindungsgemäßen Verfahren durchaus realistisch, fünf Laserdioden und 32 Einzelphotonendetektoren einzusetzen, so dass ein Faktor von 160 erreicht wird.

### Bezugszeichenliste

- 1: Laserstrahl 1
- 2: Laserstrahl 2
- 3: Laserstrahl 3
- 4: Fokussiereinrichtung
- 5: Linse
- 6: Probe
- 7: gestreutes Licht
- 8: Mikroskop-Optik
- 9: Blende
- 10.1: Streuvolumen 1
- 10.2: Streuvolumen 2
- 10.3: Streuvolumen 3
- 11: Einzelphotonendetektor 1
- 12: Einzelphotonendetektor 2
- 13: Einzelphotonendetektor 3
- 14: Einzelphotonendetektor 4
- 15: Multiplexer
- 16: Korrelator-Untereinheiten 1-4
- 17: Korrelator-Untereinheiten 5-8
- 18: Korrelator-Untereinheiten 9-12
- 20: optische Fasern
- 21: Faserdetektor 1
- 22: Faserdetektor 2
- 23: Faserdetektor 3
- 24: Faserdetektor 4

## Patentansprüche

1. Verfahren zur Bestimmung der statischen und/oder dynamischen Lichtstreuung, das mindestens die folgenden Schritte aufweist:
a) Beleuchten mehrerer unterschiedlicher Zonen (10.1, 10.2, 10.3) innerhalb eines Probengefäßes (6) während verschiedener Zeitabschnitte (t₁, t₂, t₃),
wobei es sich bei den unterschiedlichen Zonen um räumlich voneinander getrennte Zonen handelt, wobei der räumliche Abstand der Zonen so gewählt ist, dass sich durch die gewählte Betrachtungsoptik voneinander unabhängige, nicht-überlappende Betrachtungszonen ergeben, und wobei Licht an der Probe gestreut wird, und
wobei die unterschiedlichen Zonen nacheinander in einer sich wiederholenden, periodischen oder zufälligen Abfolge beleuchtet werden, wobei die Wiederholungsperiodendauer weniger als 10 µs beträgt,
b) Erfassen des gestreuten Lichts (7) mittels mehrerer Detektoren (11, 12, 13, 14, 21, 22, 23, 24),
wobei jeder Detektor während der Durchführung des Verfahrens gestreutes Licht aus mehreren unterschiedlichen Zonen erfasst, und
wobei jeder Detektor während eines gegebenen Zeitabschnittes jeweils gestreutes Licht (7) aus ein und derselben Zone erfasst und ein Signal erzeugt,
c) Übertragen der Signale an eine Auswerteelektronik und Verarbeiten der Signale durch die Auswerteelektronik, wobei jeweils diejenigen Signale zur Korrelationsberechnung gemeinsam verarbeitet werden, die vom selben Detektor erzeugt werden und aus der Erfassung von gestreutem Licht aus derselben Zone resultieren.

2. Verfahren nach Anspruch 1, wobei die Anzahl der unterschiedlichen Zonen mindestens 2, vorzugsweise mindestens 3 und insbesondere mindestens 4 beträgt, wobei es bevorzugt ist, wenn kohärentes Licht für das Beleuchten der unterschiedlichen Zonen verwendet wird.

3. Verfahren nach einem der vorangehenden Ansprüche, wobei die Anzahl der Detektoren (11, 12, 13, 14, 21, 22, 23, 24) mindestens 2, vorzugsweise mindestens 4 und insbesondere mindestens 16 beträgt, wobei es bevorzugt ist, wenn die Detektoren am selben Streuwinkel angeordnet sind.

4. Verfahren nach einem der vorangehenden Ansprüche, wobei die Auswerteelektronik mehrere Korrelator-Untereinheiten (16, 17, 18) aufweist und die simultane Berechnung von mehreren Korrelationsfunktionen erlaubt, wobei Signale von jeweils einem Detektor zur Korrelationsberechnung an jeweils dieselbe Korrelator-Untereinheit übertragen werden.

5. Verfahren nach einem der vorangehenden Ansprüche, wobei die Wiederholungsperiodendauer weniger als 2 µs und insbesondere weniger als 1 µs beträgt.

6. Vorrichtung zur Bestimmung der statischen und/oder dynamischen Licht-streuung, die mindestens die folgenden Komponenten aufweist:
• ein Probengefäß (6),
• eine Lichtquelle (1, 2, 3), welche in der Lage ist, während verschiedener Zeitabschnitte (t₁, t₂, t₃) unterschiedliche Zonen (10.1, 10.2, 10.3) innerhalb des Probengefäßes zu beleuchten,
wobei es sich bei den unterschiedlichen Zonen um räumlich voneinander getrennte Zonen handelt, wobei der räumliche Abstand der Zonen so gewählt ist, dass sich durch die gewählte Betrachtungsoptik voneinander unabhängige, nicht-überlappende Betrachtungszonen ergeben,
und
wobei die unterschiedlichen Zonen nacheinander in einer sich wiederholenden, periodischen oder zufälligen Abfolge beleuchtet werden, wobei die Wiederholungsperiodendauer weniger als 10 µs beträgt,
• mehrere Detektoren (11, 12, 13, 14, 21, 22, 23, 24), welche so angeordnet sind, dass jeder Detektor gestreutes Licht (7) aus mehreren unterschiedlichen Zonen erfasst, und wobei jeder. Detektor während eines gegebenen Zeitabschnittes jeweils gestreutes Licht (7) aus ein und derselben Zone erfasst und ein Signal erzeugt,
• eine Auswerteelektronik, welche mit den Detektoren verbunden ist und die Signale verarbeitet, wobei jeweils diejenigen Signale zur Korrelationsberechnung gemeinsam verarbeitet werden, die vom selben Detektor erzeugt werden und aus der Erfassung von gestreutem Licht aus derselben Zone resultieren.

7. Vorrichtung nach Anspruch 6, wobei
• die Anzahl der unterschiedlichen Zonen mindestens 2, vorzugsweise mindestens 3 und insbesondere mindestens 4 beträgt und/oder
• es sich bei der Lichtquelle (1, 2, 3) um eine Laserlichtquelle handelt, wobei es bevorzugt ist, wenn die Lichtquelle mehrere Laserdioden aufweist, wobei die Anzahl an Laserdioden vorzugsweise mindestens 2, besonders bevorzugt mindestens 3 und insbesondere mindestens 4 beträgt und/oder
• die Lichtquelle eine optische und/oder opto-elektrische Vorrichtung aufweist, die in der Lage ist, das erzeugte Licht in mehrere, voneinander zeitlich getrennt ein- und ausschaltbare Strahlenbündel aufzutrennen, wobei es bevorzugt ist, wenn die Anzahl an Strahlenbündeln mindestens 2, vorzugsweise mindestens 3 und insbesondere mindestens 4 beträgt und/oder
• die Lichtquelle eine Optik aufweist, die in der Lage ist, das erzeugte Licht so zu lenken, dass während verschiedener Zeitabschnitte unterschiedliche Zonen innerhalb des Probengefäßes beleuchtet werden.

8. Vorrichtung nach einem der Ansprüche 6 bis 7, wobei die Anzahl der Detektoren mindestens 2, vorzugsweise mindestens 3 und insbesondere mindestens 4 beträgt, wobei es bevorzugt ist, wenn die Detektoren zur Detektion im selben Streuwinkel angeordnet sind und/oder wenn es sich bei den Detektoren um Einzelphotonendetektoren handelt.

9. Vorrichtung nach einem der Ansprüche 6 bis 8, wobei die Auswerteelektronik mehrere Korrelator-Untereinheiten (16, 17, 18) zur Berechnung der Korrelationsfunktionen aufweist, so dass zu den Signalen jedes Detektors für jede beleuchtete Zone eine unabhängige Korrelationsfunktion berechnet wird, wobei die Anzahl der Korrelator-Untereinheiten (16, 17, 18) vorzugsweise mindestens 2, besonders bevorzugt mindestens 48 und insbesondere mindestens M x N beträgt, wobei M die Anzahl der Zonen und N die Anzahl der Detektoren ist.

10. Vorrichtung nach einem der Ansprüche 6 bis 9, wobei die Detektoren über einen Multiplexer (15) mit der Auswerteelektronik ver bunden sind.

## Claims

1. A method for determining the static and/or dynamic scattering of light, comprising at least the following steps:
(a) illumination of a plurality of different zones (10.1, 10.2, 10.3) within a sample vessel (6) during different time segments (t₁, t₂, t₃),
wherein the different zones are spatially separated from one another, wherein the spatial separation of the zones is selected in such a manner that due to the chosen observation optics mutually independent, non-overlapping observation zones are obtained, and
wherein light is scattered at the sample, the different zones being illuminated sequentially in a repeating, periodic or random order, wherein the repetition period is less than 10 µs,
(b) detection of the scattered light (7) by means of a plurality of detectors (11, 12, 13, 14, 21, 22, 23, 24),
wherein during the implementation of the method each detector detects scattered light from a plurality of different zones, and
wherein during a given time period each detector detects scattered light (7) from one and the same zone, and generates a signal,
(c) transmission of the signals to an evaluation electronics and processing of the signals by the evaluation electronics, wherein to calculate a correlation in each case those signals which are generated by the same detector and result from the detection of scattered light from the same zone, and therefore the same time period, are processed together.

2. The method according to claim 1, wherein the number of different zones is at least 2, preferably at least 3, and in particular at least 4, where it is preferred if coherent light is used for illuminating the different zones.

3. The method according to any one of the previous claims, wherein the number of detectors (11, 12, 13, 14, 21, 22, 23, 24) is at least 2, preferably at least 4, and in particular at least 16, wherein it is preferred if the detectors are arranged at the same scattering angle.

4. The method according to any one of the previous claims, wherein the evaluation electronics comprises a plurality of correlator sub-units (16, 17, 18) and allows the simultaneous calculation of a plurality of correlation functions, wherein to perform the correlation calculation signals from one detector data are in each case transferred to the same correlator-sub-unit.

5. The method according to any one of the previous claims, wherein the repetition period is less than 10 µs, preferably less than 2 µs and in particular less than 1 µs.

6. A device for determining the static and/or dynamic scattering of light, comprising at least the following components:
- a sample vessel (6),
- a light source (1, 2, 3), which is capable of illuminating different zones (10.1, 10.2, 10.3) within the sample vessel during different time periods (t₁, t₂, t₃),
wherein the different zones are spatially separated from one another, wherein the spatial separation of the zones is selected in such a manner that due to the chosen observation optics mutually independent, non-overlapping observation zones are obtained, and
wherein the different zones are illuminated sequentially in a repeating, periodic or random order, wherein the repetition period is less than 10 µs,
- a plurality of detectors (11, 12, 13, 14, 21, 22, 23, 24), which are arranged in such a manner that each detector detects scattered light (7) from several different zones, and wherein during a given time period each detector detects scattered light (7) from one and the same zone and generates a signal,
- an evaluation electronics, which is connected to the detectors and processes the signals, wherein to calculate a correlation in each case those signals which are generated by the same detector and result from the detection of scattered light from the same zone, and therefore the same time period, are processed together.

7. The device according to claim 6, wherein
- the number of different zones is at least 2, preferably at least 3, and in particular at least 4 and/or
- the light source (1, 2, 3) is a laser light source, wherein it is preferred if the light source has a plurality of laser diodes, wherein the number of laser diodes is preferably at least 2, particularly preferably at least 3, and in particular, preferably is at least 4 and/or
- the light source is an optical and/or opto-electrical device that is capable of separating the light generated into a plurality of spatially separated light beams which can be turned on and off, wherein it is preferred if the number of light beams is at least 2, preferably at least 3, and in particular at least 4 and/or
- the light source has a set of optics that is capable of deflecting the light generated in such a manner that different zones within the sample vessel are illuminated during different time periods.

8. The device according to any one of claims 6 to 7, wherein the number of detectors is at least 2, preferably at least 3, and in particular at least 4, wherein for the purposes of detection it is preferred if the detectors are arranged at the same scattering angle and/or if the detectors are single photon detectors.

9. The device according to any one of claims 6 to 8, wherein the evaluation electronics comprises a plurality of correlator sub-units (16, 17, 18) for calculating the correlation functions, so that an independent correlation function is calculated for signals from each detector for each illuminated zone, wherein the number of correlator sub-units (16, 17, 18) is preferably at least 2, particularly preferably at least 48 and in particular has a value of at least M x N, where M is the number of zones and N is the number of detectors.

10. The device according to any one of claims 6 to 9, wherein the detectors are connected to the evaluation electronics via a multiplexer (15).

## Revendications

1. Procédé pour la détermination de la diffusion de lumière statique et/ou dynamique, lequel présente au moins les étapes suivantes :
a) éclairage de plusieurs zones (10.1, 10.2, 10.3) différentes à l'intérieur d'un récipient d'échantillons (6) pendant différentes périodes de temps (t₁, t₂, t₃),
dans lequel, concernant les différentes zones, il s'agit de zones séparées les unes des autres dans l'espace, l'espacement spatial des zones étant choisi de manière à ce que, grâce à l'optique d'observation choisie, on obtient des zones d'observation indépendantes les unes des autres ne se chevauchant pas, et de la lumière étant diffusée au niveau de l'échantillon, et
les différentes zones étant éclairées successivement selon une séquence périodique ou aléatoire qui se répète, la durée de période de répétition étant de moins de 10 µs,
b) détection de la lumière diffusée (7) à l'aide de plusieurs détecteurs (11, 12, 13, 14, 21, 22, 23, 24),
chaque détecteur détectant, pendant la mise en oeuvre du procédé, de la lumière diffusée à partir de plusieurs zones différentes, et
pendant une période de temps donnée, chaque détecteur détectant de la lumière diffusée (7) respective à partir d'une et même zone et produisant un signal,
c) transmission des signaux à un appareil électronique d'évaluation et traitement des signaux grâce à l'appareil électronique d'évaluation, respectivement ceux des signaux qui sont produits par le même détecteur et qui résultent de la détection de lumière diffusée à partir de la même zone étant traités ensembles pour le calcul de la corrélation.

2. Procédé selon la revendication 1, dans lequel le nombre des différentes zones est au moins de 2, de préférence au moins de 3 et en particulier au moins de 4, dans lequel on préfère que de la lumière cohérente pour l'éclairage des différentes zones soit utilisée.

3. Procédé selon l'une des revendications précédentes, dans lequel le nombre de détecteurs (11, 12, 13, 14, 21, 22, 23, 24) est au moins de 2, de préférence au moins de 4 et en particulier au moins de 16, dans lequel on préfère que les détecteurs soient disposés dans le même angle de diffusion.

4. Procédé selon l'une des revendications précédentes, dans lequel l'appareil électronique d'évaluation présente plusieurs sous-unités de corrélateur (16, 17, 18) et permet le calcul simultané de plusieurs fonctions de corrélation, des signaux de respectivement un détecteur étant transmis respectivement à la même sous-unité de corrélateur pour le calcul de la corrélation.

5. Procédé selon l'une des revendications précédentes, dans lequel la durée de période de répétition est de moins de 2 µs, et en particulier de moins de 1 µs.

6. Dispositif pour la détermination de la diffusion de lumière statique et/ou dynamique, lequel présente au moins les éléments constitutifs suivants :
- un récipient d'échantillons (6),
- une source de lumière (1, 2, 3), laquelle est en mesure, pendant différentes périodes de temps (t₁, t₂, t₃), d'éclairer différentes zones (10.1, 10.2, 10.3) à l'intérieur du récipient d'échantillons,
dans lequel, concernant les différentes zones, il s'agit de zones séparées les unes des autres dans l'espace, l'espacement spatial des zones étant choisi de manière à ce que, grâce à l'optique d'observation choisie, on obtient des zones d'observation indépendantes les unes des autres ne se chevauchant pas, et
dans lequel les différentes zones sont éclairées successivement selon une séquence périodique ou aléatoire qui se répète, la durée de période de répétition étant de moins de 10 µs,
- plusieurs détecteurs (11, 12, 13, 14, 21, 22, 23, 24), lesquels sont disposés d'une manière telle, que chaque détecteur détecte de la lumière diffusée (7) à partir de plusieurs zones différentes, et pendant une période de temps donnée, chaque détecteur détectant respectivement de la lumière diffusée (7) à partir d'une et même zone et produisant un signal,
- un appareil électronique d'évaluation, lequel est relié aux détecteurs et traite les signaux, respectivement ceux des signaux qui sont produits par le même détecteur et qui résultent de la détection de lumière diffusée à partir de la même zone étant traités ensembles pour le calcul de la corrélation.

7. Dispositif selon la revendication 6, dans lequel
- le nombre des différentes zones est au moins de 2, de préférence au moins de 3 et en particulier au moins de 4, et/ou
- concernant la source de lumière (1, 2, 3), il s'agit d'une de lumière laser, dans lequel on préfère que la source de lumière présente plusieurs diodes laser, le nombre des diodes laser étant de préférence au moins de 2, de manière particulièrement préférée au moins de 3 et en particulier au moins de 4, et/ou
- la source de lumière présentant un dispositif optique et/ou opto-électrique, lequel est en mesure de séparer la lumière produite en plusieurs faisceaux de rayons séparés les uns des autres dans le temps et pouvant être allumés et éteints, dans lequel on préfère que le nombre des faisceaux de rayons soit au moins de 2, de préférence au moins de 3 et en particulier au moins de 4, et/ou
- la source de lumière présentant une optique, laquelle est en mesure de guider la lumière produite d'une manière telle, que pendant différentes périodes de temps, différentes zones à l'intérieur du récipient d'échantillons sont éclairées.

8. Dispositif selon l'une des revendications 6 à 7, dans lequel le nombre de détecteurs est au moins de 2, de préférence au moins de 3 et en particulier au moins de 4, dans lequel on préfère que les détecteurs soient disposés dans le même angle de diffusion pour la détection et/ou qu'en ce qui concerne les détecteurs, il s'agit de détecteurs de photons individuels.

9. Dispositif selon l'une des revendications 6 à 8, dans lequel l'appareil électronique d'évaluation présente plusieurs sous-unités de corrélateur (16, 17, 18) pour le calcul des fonctions de corrélation, de sorte que pour les signaux de chaque détecteur, pour chaque zone éclairée, on calcule une fonction de corrélation indépendante, le nombre des sous-unités de corrélateur (16, 17, 18) étant de préférence au moins de 2, de manière particulièrement préférée au moins de 48 et en particulier au moins de M x N, M étant le nombre de zones et N le nombre de détecteurs.

10. Dispositif selon l'une des revendications 6 à 9, dans lequel les détecteurs sont reliés par l'intermédiaire d'un multiplexeur (15) à l'appareil électronique d'évaluation.
